# FASCICULE DE BREVET EUROPEEN

(11) **EP 1 590 059 B1**
(45) Date de publication et mention de la délivrance du brevet: **06.04.2011**
(21) Numéro de dépôt: 03717387.9
(22) Date de dépôt: 07.02.2003
(51) Int. Cl.: B01D 5/00, B01D 1/00, B01D 19/00, B01D 29/72

(54) **PROCEDE VIBRATOIRE DE SEPARATION D UN MELANGE FLUIDE EN UN F LUIDE PORTEUR ET UN CONSTITUANT COMPLEMENTAIRE**
VIBRATIONSVERFAHREN ZUR TRENNUNG EINER MISCHUNG IN EINE TRÄGERFLÜSSIGKEIT UND EINEN KOMPLEMENTÄREN BESTANDTEIL
VIBRATION METHOD OF SEPARATING A FLUID MIXTURE INTO A CARRIER FLUID AND A COMPLEMENTARY COMPONENT

(43) Date de publication de la demande: 02.11.2005
(73) Titulaire: Touzova, Tamara, 75012 Paris (FR); Doubochinski, Daniel, 75012 Paris (FR)
(72) Inventeur: DOUBOCHINSKI, Daniel, F-75012 Paris (FR)
(74) Mandataire: Lagrange, Jacques Etienne M.M.
(86) Numéro de dépôt international: PCT/FR2003/000408
(87) Numéro de publication internationale: WO 2004/078308

(56) Documents cités:
- FR-A- 2 744 931
- FR-A- 2 802 118
- US-A- 5 733 416
- US-B1- 6 395 186

## Description

L'invention est relative à la séparation d'un mélange fluide en un fluide porteur et un constituant complémentaire.

Les mélanges fluides correspondent à des milieux physiques très divers comprenant plusieurs constituants. Ces mélanges fluides peuvent être homogènes, c'est-à-dire constitués d'une seule phase liquide ou gazeuse, ou hétérogènes, c`est-à-dire constitués d'au moins une phase liquide ou gazeuse et au moins une deuxième phase liquide, gazeuse, solide ou colloïdale.

Pour de nombreuses applications, on cherche à séparer les constituants d'un mélange fluide en d'une part un fluide porteur et d'autre part un constituant complémentaire. Pour cela, on utilise des procédés divers tels que la filtration sur membrane, la nano et la micro filtration, l'osmose inverse, l'émulsion à membrane liquide et leurs combinaisons, ainsi que les procédés de séparation mécanique, ultrasonore, électrique, magnétique et mixte (par exemple électromagnétique) ou encore les procédés de distillation.

Les mélanges fluides considérés étant très divers, par la suite, on utilisera également l'expression « milieu physique » pour désigner un « mélange fluide », « milieu véhicule » pour désigner un « fluide porteur » et « milieu à séparer » pour désigner un « constituant complémentaire ».

On connaît des procédés et des dispositifs de séparation de milieux physiques par filtration statique et dynamique. Ils reposent sur les principes de base suivants :
- on sépare le volume du dispositif par un dispositif de séparation par exemple un filtre, en deux zones, dans l'une desquelles, au moyen d'une source de puissance de nature statique ou impulsionnelle, on exerce une action sur le milieu physique, par exemple une pression au moyen d'une pompe de remplissage grâce à quoi, on crée une différence de pression sur les côtés opposés du filtre,
- on agit sur le dispositif de séparation, par exemple le filtre, par une action complémentaire, par exemple, à l'aide de courants inverses de liquide et on nettoie de ce fait, les pores de la surface du filtre, en la débarrassant des éléments qui l'obturent et qui bloquent son fonctionnement,
- on sépare par les actions indiquées plus haut, le milieu physique (à purifier) en un milieu véhicule (purifié) et les éléments à séparer et on les évacue séparément hors du dispositif.

Les inconvénients essentiels des procédés et dispositifs existants de purification et de séparation des milieux physiques sont les suivants :
- dépenses d'énergie importantes pour la purification des milieux physiques,
- faible durée de vie des systèmes de séparation, par exemple des filtres et nécessité de leurs remplacements fréquents lors de la mise en oeuvre de procédés statiques de filtration,
- la régénération des systèmes de séparation, par exemple des filtres donne lieu à d'importantes dépenses complémentaires, matérielles et énergétiques, conditionnées par la création de vitesses élevées et/ou de courants tourbillonnaires le long des surfaces des filtres à nettoyer,
- action destructive des courants tourbillonnaires à grande vitesse sur les éléments à séparer (à purifier), dans le cas de la nécessité de leur utilisation ultérieure,
- faible rendement nominal des dispositifs, dû à l'obturation progressive des pores des filtres et à la nécessité d'utilisation de matériaux ayant des pores de diamètre réduit pour réduire la vitesse de leur obturation,
- importantes dépenses en temps pour le nettoyage des systèmes de séparation, par exemple des filtres, dues à la réduction de leur rendement nominal lors de leur fonctionnement ininterrompu en raison du dépôt des éléments à séparer sur les surfaces du filtre et dans ses pores.

On connaît également un procédé et des dispositifs de séparation de milieux physiques par distillation.

Ils reposent sur la modification de l'état d'un milieu physique, par exemple liquide, par son échauffement, son évaporation et son refroidissement.

Les inconvénients essentiels de ce procédé et des dispositifs pour sa mise en oeuvre sont les suivants :
- efficacité et rendement faibles, dus à des dépenses importantes en énergie et en milieu physique,
- construction complexe,
- durée de cycle importante,
- coût élevé des installations et de leur exploitation,
ce qui en fin de compte limite leurs applications essentiellement à des laboratoires et des centres scientifiques pharmaceutiques, biologiques et chimiques.

Le but de la présente invention est de remédier à ces inconvénients en proposant un moyen pour purifier un milieu physique ayant un rendement amélioré et nécessitant des dépenses en temps et énergie sensiblement réduites.

A cet effet, l'invention a pour objet un procédé de séparation d'un mélange fluide en un fluide porteur et un constituant complémentaire à l'aide d'une installation de séparation constituée d'un dispositif d'arrivée de mélange fluide, d'une enceinte de séparation comportant une première chambre, une deuxième chambre et un moyen de séparation, d'un dispositif d'évacuation de fluide porteur et d'un dispositif d'évacuation du constituant complémentaire, selon lequel on envoie un courant de mélange fluide dans le dispositif d'arrivée de mélange fluide de façon à l'introduire dans la première chambre, à l'aide du moyen de séparation on sépare le mélange fluide en un fluide porteur qui est recueilli dans la deuxième chambre et un constituant complémentaire qui reste dans la première chambre, et on évacue le fluide porteur par le dispositif d'évacuation du fluide porteur et le constituant complémentaire par le dispositif d'évacuation du constituant complémentaire. Selon l'invention, dans le dispositif d'arrivée de mélange fluide, on soumet le courant de mélange fluide à l'action d'au moins un premier phénomène périodique ayant une première fréquence, et, dans la première chambre, on soumet le mélange fluide à l'action d'au moins un deuxième phénomène périodique ayant une deuxième fréquence, les fréquences du premier phénomène périodique et du deuxième phénomène périodique étant dans un rapport supérieur à 10, et on régule le débit d'arrivée du mélange fluide, le débit d'évacuation du fluide porteur et le débit d'évacuation du constituant complémentaire. Les phénomènes périodiques utilisés peuvent être de différent type, et, en particulier, du type mécanique, acoustique, ultrasonique, thermique, électrique, magnétique ou mixtes par exemple électromagnétique, électromécaniques etc.

En outre, on peut soumettre au moins le moyen de séparation à l'action d'au moins un troisième phénomène périodique.

De préférence, on régule en fréquence et /ou en amplitude les différents phénomènes périodiques utilisés, en fonction d'au moins un des débits de mélange fluide, de fluide porteur et de constituant complémentaire.

Le moyen de séparation peut comporter au moins une membrane.

Lors de l'introduction du mélange fluide dans la première chambre, on peut également pulvériser finement ou microniser ledit mélange fluide de façon à produire un milieu constitué de particules dont les dimensions sont inférieures au micron, et, à l'aide de phénomènes périodiques, on condense lesdites particules, et on sépare le fluide porteur et le constituant complémentaire. Pour faciliter la pulvérisation ou la micronisation du mélange fluide, on peut soumettre le mélange fluide à l'action d'un phénomène périodique du type micro-ondes ou ultrason, ou encore leur combinaison. Pour séparer le mélange fluide micronisé en fluide porteur et constituant complémentaire, on peut créer des vagues de flux de fluide porteur à l'aide d'au moins une action périodique formée par un dispositif de condensation constitué d'une chicane. Ce procédé s'applique notamment au dessalement de l'eau de mer, et dans ce cas le mélange fluide est de l'eau de mer, le fluide porteur est de l'eau douce et l'élément complémentaire est de l'eau à forte concentration en sel.

L'invention concerne également une installation pour la mise en oeuvre du procédé de séparation selon l'invention. Cette installation comprend un dispositif d'arrivée de mélange fluide, une enceinte de séparation, un dispositif d'évacuation de fluide porteur et d'un dispositif d'évacuation du constituant complémentaire, ladite enceinte de séparation comportant une première chambre, une deuxième chambre et un moyen de séparation. En outre, le dispositif d'arrivée de mélange fluide comprend au moins un dispositif pour faire agir au moins un premier phénomène périodique, et au moins la première chambre comporte au moins un dispositif pour faire agir au moins un deuxième phénomène périodique. Le dispositif selon l'invention comprend également des moyens de commande et de régulation du dispositif d'arrivée de mélange fluide, du dispositif d'évacuation du fluide porteur, du dispositif d'évacuation du constituant complémentaire, et des dispositifs destinés à faire agir les au moins un premiers et deuxièmes phénomènes périodiques.

Au moins un dispositif pour faire agir un phénomène périodique peut être, par exemple, un sifflet ou une sirène animés par le courant d'entée du mélange fluide.

L'installation selon l'invention peut comprendre au moins un moyen pour faire agir un phénomène périodique électromagnétique et/ou thermique sur le courant d'arrivée de mélange fluide, au moins un moyen pour faire agir un phénomène périodique mécanique ou ultrasonore, un moyen de pulvérisation afin de microniser et de pulvériser sous forme de vapeur et/ou d'aérosol le mélange fluide, un moyen de condensation du mélange fluide en un fluide porteur et un constituant complémentaire du type comprenant au moins un moyen tel qu'une chicane statique, une chicane dynamique générée par un sifflet ou une sirène, ou un moyen agissant par refroidissement ou congélation, et un moyen pour faire agir un phénomène périodique du type électromagnétique et/ou thermique pour réchauffer le fluide porteur. En outre, elle peut comprendre des moyens pour évacuer le fluide porteur et des moyens pour évacuer le constituant complémentaire, constitués de pompes aspirantes et de vannes régulatrices, et des moyens d'alimentation et de régulation des moyens pour faire agir les phénomènes périodiques.

L'invention va maintenant être décrite plus en détail en regard des figures annexées, dans lesquelles :
- la figure 1 représente schématiquement une installation de séparation d'un milieu physique tel qu'un mélange fluide, mettant en oeuvre un procédé de séparation par membrane,
- la figure 2 représente schématiquement une installation de séparation d'un milieu physique tel qu'un mélange fluide, mettant en oeuvre un procédé de séparation par pulvérisation,
la figure 3 représente schématiquement une installation de dessalement d'eau de mer.

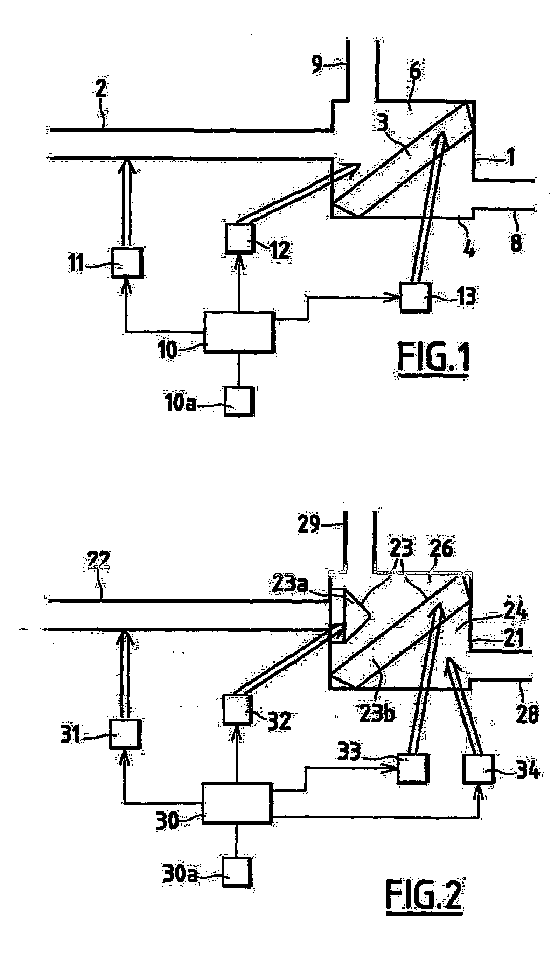

L'installation représentée à la figure 1 comporte une enceinte de séparation 1 dans lequel un milieu physique est séparé en un milieu véhicule et un milieu à séparer, à l'aide d'un moyen de séparation 3 qui divise l'enceinte 1 en au moins deux chambres 4 et 6, une première chambre 6 constituant un volume dans lequel s'accumule le milieu véhicule et une deuxième chambre 4 constituant un volume dans lequel se concentre le milieu à séparer. Le moyen de séparation 3 est par exemple une membrane de filtration ou de micro filtration, ou de nano filtration, ou une membrane osmotique. Un dispositif d'arrivée de mélange fluide 2 permet d'introduire le milieu physique dans l'enceinte de séparation 1 et débouche, en général, dans la première chambre 6 dans laquelle se concentre le milieu à séparer. Ce dispositif d'arrivée de mélange fluide 2 est constitué, par exemple, d'une canalisation, d'une pompe et d'une vanne. Un dispositif d'évacuation de fluide porteur 8 assure l'évacuation régulée du courant du milieu véhicule. Ce dispositif est constitué, par exemple, d'une canalisation munie d'une vanne régulée et/ou d'une pompe d'évacuation. Un dispositif d'évacuation de constituant complémentaire 9 assure un courant régulé du milieu à séparer. Ce dispositif est constitué par exemple d'une canalisation et d'une vanne régulée et/ou d'une pompe d'évacuation. L'installation comporte, en outre, un dispositif 11 destiné à faire agir un premier phénomène périodique sur le milieu physique dans le dispositif d'arrivée de mélange fluide 2; un deuxième dispositif 12 destiné à faire agir un deuxième phénomène vibratoire sur le milieu physique dans la première chambre 6;un troisième dispositif 13 destiné à faire agir un troisième phénomène périodique sur le moyen de séparation 3. Une source 10 d'alimentation réglable par moyen de réglage électronique 10a d'action périodique externe (vibratoire), les dispositifs 11, 12 et 13 destinés à faire agir des phénomènes périodique sur le milieu physique et sur le moyen de séparation 3.

Le milieu physique peut être constitué d'un milieu liquide, gazeux ou mélangé, dans la composition duquel peuvent entrer des liquides, des gaz, des corps colloïdaux ou solides ou leurs combinaisons.

Le milieu à séparer (éléments et corps à séparer) peut être constitué par des substances organiques et/ou non organiques de type liquide, gazeux, colloïdal et solide ou de combinaisons de telles substances.

Le système de séparation 3 peut être formé d'au moins un dispositif ou élément de filtration à membrane, de nanofiltration, d'osmone inverse, d'un système à liquide et membrane à émulsion ou de combinaisons de ces dispositifs, éléments et systèmes, et également d'un système de séparation mécanique, ultrasonore, électrique ou/et magnétique ou de combinaison de tels systèmes.

La disposition du système 3 par rapport à l'horizontale (ou de la base du dispositif) peut être quelconque : horizontale, verticale ou sous un angle quelconque.

Si le système de séparation 3 est réalisé sous la forme d'un cylindre, par exemple, formant une pièce tournante d'une centrifugeuse, la chambre 6 dans laquelle est introduit le courant du milieu physique et dans laquelle est ensuite concentré le milieu à séparer, se trouve à l'intérieur de ce cylindre, tandis que la chambre 4 destinée à la collecte du milieu véhicule se trouve à l'extérieur de ce cylindre.

Les dispositifs 11, 12 et 13 destinés à faire agir des phénomènes périodiques, peuvent se présenter sous la forme d'au moins un dispositif d'action ultrasonore, par exemple une sirène, un sifflet, un vibrateur piézo-électrique ou leur combinaison, d'au moins un dispositif de type à magnétostriction, un dispositif de type magnétique ou électromagnétique, créant par exemple un champ magnétique ou électromagnétique de configuration ou d'intensité correspondante, ou, enfin, de différentes combinaisons des dispositifs et systèmes énumérés plus haut. Le système d'alimentation 10 assure les régimes de fonctionnement indispensables des dispositifs 11,12 et 13 destinés à faire agir des phénomènes périodiques, et comprend le régulateur 10a permettent de faire varier les fréquences et les amplitudes d'énergie en fonction des régimes de fonctionnement de ces dispositifs. De cette manière les systèmes 10 et 10a peuvent assurer la régulation du débit du dispositif par variation de la fréquence et de l'amplitude des actions périodiques sur les milieux traités et sur les dispositifs de régulation de l'évacuation de ces milieux. En qualité de source d'énergie, on peut utiliser les courants du milieu traité et du milieu véhicule. C'est le cas, en particulier, lorsque les dispositifs destinés à faire agir un phénomène périodique sont des sifflets ou des sirènes.

Les premiers et deuxième phénomènes périodiques agissant sur le milieu physique ont des fréquences qui, de préférence, sont dans un rapport supérieur à 10. C'est-à-dire, que la fréquence du deuxième phénomène est plus de 10 fois supérieure à la fréquence du premier phénomène, ou bien, la fréquence du premier phénomène est plus de 10 fois supérieure à la fréquence du deuxième phénomène.

Les dispositifs 11, 12 et 13 permettant de faire agir des phénomènes périodiques peuvent correspondre à un seul et même phénomène périodique.

Conformément au schéma représenté à la figure 1, le procédé de purification et de séparation du milieu physique, ou mélange fluide, en un milieu véhicule, ou fluide porteur, et un milieu à séparer, ou élément complémentaire, est assuré de la façon suivante :
- le courant régulé du milieu physique, amené par le dispositif d'arrivée de mélange fluide 2, pénètre dans la chambre 6 de l'enceinte de séparation 1 ;
- au cours de son déplacement, le milieu physique est soumis à au moins une action d'un premier phénomène périodique à l'aide du dispositif 11, immédiatement avant son introduction dans la chambre 6, et à l'action d'un deuxième phénomène périodique dans la chambre 6 elle-même à l'aide du dispositif 12. Les actions précitées créent les conditions de concentration du milieu à séparer sous l'action des vibrations mécaniques, électromagnétiques, acoustiques ou/et mixte et contribuent à son évacuation efficace à l'aide du dispositif d'évacuation de constituant complémentaire 9 en régime régulé.

Dans la chambre 6, le milieu physique entre en interaction avec le système de séparation 3 auquel est appliquée une action vibratoire, assurant les conditions de son auto-nettoyage et de son fonctionnement ininterrompu en régime stationnaire; par exemple, la surface du système de séparation 3 est soumise à l'action de courants tourbillonnaires, crées par un disque tournant de configuration déterminée.

Le milieu véhicule obtenu du fait de la séparation et du nettoyage est évacué hors de l'enceinte de séparation 1 par le dispositif d'évacuation de fluide porteur 8, en régime régulé.

Dans un deuxième mode de réalisation, représenté à la figure 2, le dispositif comporte une enceinte de séparation 21 dans lequel un milieu physique est séparé en un milieu véhicule et un milieu à séparer, à l'aide d'un moyen de séparation 23 qui divise l'enceinte 21 en au moins deux chambres 24 et 26, la chambre 24 constituant un volume dans lequel s'accumule le milieu véhicule et la chambre 26 constituant un volume dans lequel se concentre le milieu à séparer. Le moyen de séparation 23 est constitué d'un moyen de micronisation et de pulvérisation 23a du milieu physique qui est, par exemple, un injecteur, et un moyen de condensation 23b. Un dispositif d'arrivée de mélange fluide 22 permet d'introduire le milieu physique dans l'enceinte de séparation 21 et débouche dans la chambre 26 à travers le dispositif 23a de micronisation et de pulvérisation de telle sorte que le milieu physique pénètre dans la chambre 26 à l'état pulvérisé. Le dispositif d'arrivée de mélange fluide 22 est constitué par exemple d'une canalisation, d'une pompe et d'une vanne. Un dispositif d'évacuation de fluide porteur 28 assure l'évacuation régulée du courant du milieu véhicule. Ce dispositif est constitué par exemple d'une canalisation munie d'une vanne régulée et/ou d'une pompe d'évacuation. Un dispositif d'évacuation de constituant complémentaire 29 assure un courant régulé du milieu à séparer. Ce dispositif est constitué par exemple d'une canalisation et d'une vanne régulée et/ou d'une pompe d'évacuation. L'installation comporte, en outre, un dispositif 31 destiné à faire agir un premier phénomène périodique sur le milieu physique dans le dispositif d'arrivée de mélange fluide 22; un deuxième dispositif 32 destiné à faire agir un deuxième phénomène vibratoire sur le milieu physique est associé au moyen de micronisation et de pulvérisation 23a; un troisième dispositif 33 destiné à faire agir un troisième phénomène périodique est associé au moyen de refroidissement 23b; enfin, un quatrième dispositif 34 destiné à faire agir un quatrième phénomène périodique dans la deuxième chambre 24. Une source 30 d'alimentation réglable par moyen de réglage électronique 30a d'action périodique externe (vibratoire), alimente les dispositifs 31, 32, 33 et 34 destinés à faire agir des phénomènes périodique sur le milieu physique et sur les moyens 23a et 23b du dispositif de séparation 23.

Le moyen de micronisation et de pulvérisation 23a à fine dispersion du milieu physique est par exemple un pulvérisateur mécanique et/ou acoustique qui disperse et injecte le milieu physique sous forme de vapeur et/ou d'aérosol avec des dimensions de particules (gouttelettes) du niveau moléculaire (inférieures au micron).

Le moyen de condensation 23b est, par exemple, une chicane statique ou une chicane dynamique constituée par un moyen tel qu'un sifflet ou une sirène engendrant un écoulement pulsé du fluide, ou encore, un moyen de refroidissement ou de congélation. Lorsque le moyen de condensation 23b est un moyen de refroidissement et/ou de congélation, ce moyen peut être un moyen vibratoire tel que décrit dans la demande de brevet français publiée sous le numéro FR 28 02118.

Dans ce cas, le processus traditionnel d'évaporation coûteux et consommant de l'énergie est remplacé par une technologie d'injection à faible dispersion qui se caractérise par une demande d'énergie et de temps des dizaines de fois plus faible.

Ainsi, le dispositif de séparation 23 est un système constitué d'une part d'un injecteur 23a et d' une chambre acoustique de microniseur, qui pulvérise le milieu physique à dispersion fine et d'autre part un moyen de condensation 23b, la première chambre 26 est un réservoir dans lequel est concentré le milieu à séparer et la chambre 24 est un réservoir pour le milieu véhicule ou porteur.

Chacun des systèmes d'action vibratoire 31, 32, 33 et 34 peut être constitué d'au moins un dispositif de type mécanique, par exemple un vibreur mécanique ou d'un dispositif d'action ultrasonore, par exemple une sirène, un sifflet, un vibreur piézo-électrique, ou d'un dispositif créant un champ électromagnétique ou magnétique ou un rayonnement de configuration et d'intensité correspondante ou enfin de différentes combinaisons des dispositifs et systèmes énumérés plus haut.

Le système d'alimentation 30 assure les régimes indispensables de fonctionnement des systèmes vibratoires 31, 32, 33 et 34 et comprend le régulateur 30a permettent de faire varier les fréquences et les amplitudes d'énergie en fonction des régimes de fonctionnement de ces systèmes vibratoires. De cette manière les systèmes 30 et 30a peuvent assurer la régulation du débit du dispositif par variation de la fréquence et de l'amplitude des actions périodiques sur les milieux traités et sur les dispositifs de régulation de l'évacuation de ces milieux En qualité de source d'énergie, on peut utiliser les courants du milieu physique et du milieu véhicule.

Le milieu physique peut être constitué d'un milieu liquide, gazeux ou d'un mélange, dans la composition duquel peuvent entrer des liquides, des gaz, des corps colloïdaux et solides ou des combinaisons de ceux-ci. Le milieu à séparer (éléments et corps à séparer) peut être constitué par des corps organiques et/ou non organiques de type liquide, gazeux, colloïdal ou solide ou de leur combinaison.

Toujours en référence à la figure 2, le procédé de purification et de séparation d'un milieu physique en un milieu véhicule ou porteur et un milieu à séparer va maintenant être décrit.

Le courant régulé du milieu physique arrivant par le dispositif d'arrivée de mélange fluide 22 est admis dans le moyen de micronisation et de pulvérisation 23a ; au cours de son déplacement, le courant de milieu physique est soumis à au moins une action vibratoire 31 immédiatement avant sa pénétration dans le moyen de micronisation et de pulvérisation 23a , par exemple au moyen d'un rayonnement à micro-ondes, ce qui crée une condition complémentaire favorable au traitement du milieu physique dans le moyen de micronisation et de pulvérisation 23a ; ensuite, le milieu physique est micronisé et pulvérisé par le moyen de micronisation et de pulvérisation 23a à l'aide de l'action périodique correspondante 32.

Les actions 31 et 32 précitées établissent les conditions nécessaires et suffisantes pour une pulvérisation du milieu physique à dispersion fine, sous forme de vapeur de micro particules et elles le préparent pour le processus de refroidissement rapide et/ou de congélation dans le moyen de réfrigération 23b.

Les particules à dispersion fine du milieu véhicule refroidies et/ou congelées, par exemple d'eau pure pénètrent dans la chambre 24 dans laquelle elles fondent sous l'action d'un rayonnement périodique 34, par exemple à micro-ondes ou d'un autre rayonnement thermique et sont évacuées à l'aide du dispositif d'évacuation de fluide porteur 28 en régime régulé. Les particules du milieu à séparer, par exemple d'eau à grande concentration de sel, dont la température de congélation se distingue considérablement de la température de congélation du milieu véhicule, sont concentrées dans la chambre 26 et sont évacuées hors du système par le dispositif d'évacuation de constituant complémentaire en régime régulé.

On va maintenant décrire l'application du procédé selon l'invention au cas particulier du dessalement de l'eau de mer.

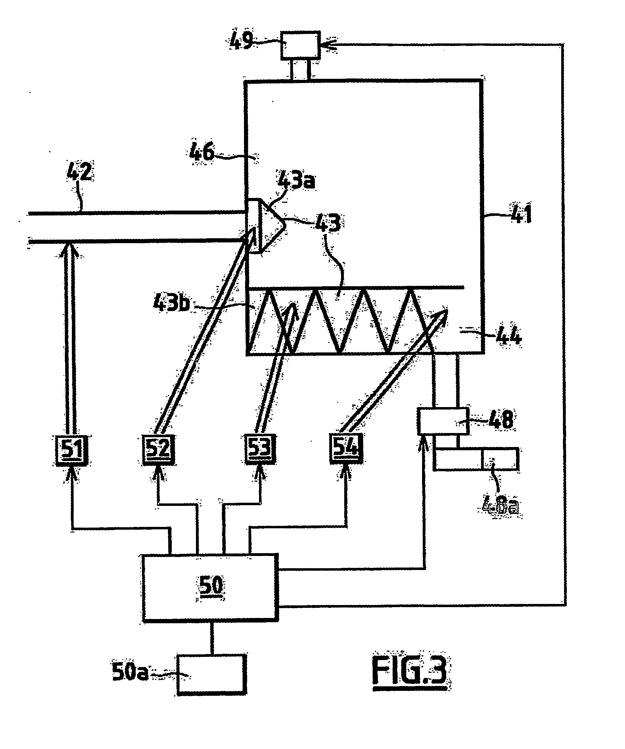

Sur la figure 3, est représenté le schéma d'une installation mettant en oeuvre un procédé de dessalement d'eau de mer par la séparation de l'eau salée (milieu physique ou mélange fluide) en un milieu véhicule (eau purifié) et un milieu à séparer (eau à très forte concentration en sel), à l'aide d'au moins un moyen de séparation, conformément à l'invention.

L'installation représenté à la figure 3 comporte une enceinte de séparation 41 dans laquelle un courant régulé d'eau de mer amené par un dispositif d'arrivée de mélange fluide 42 est séparé en un milieu véhicule et en un milieu à séparer. L'enceinte de séparation 41 comporte au moins un moyen vibratoire de séparation 43 de l'eau salée en eau gazéifiée (vaporisée) et eau salée ayant une concentration plus importante en sel, et au moins deux chambres 44 et 46 dans lesquelles pénètrent et sont traités respectivement l'eau salée, le milieu véhicule et le milieu à séparer. Le moyen de séparation 43 est un moyen vibratoire. Il est constitué d'un dispositif vibratoire de vaporisation 43a et d'un moyen vibratoire de condensation 43b. Au moins un dispositif d'évacuation du fluide porteur 48 assure la translation des molécules d'eau gazéifiées (vaporisées) complété par un dispositif 48a assurant l'évacuation du courant régulé du milieu véhicule et la condensation des molécules d'eau gazéifiées (vaporisées) pour former un milieu liquide purifiée (eau pure). Au moins un dispositif d'évacuation du constituant complémentaire 49 assure l'évacuation du courant régulé du milieu à séparer. Le dispositif vibratoire de vaporisation 43a disposé au débouché du dispositif d'arrivée de mélange fluide 42 dans la chambre 46 vaporise l'eau de mer qui pénètre dans l'enceinte de séparation. Le moyen vibratoire de condensation 43b, disposé entre les chambres 44 et 46, permet de séparer le milieu véhicule (vapeur d'eau pure) et le milieu à séparer (eau très fortement chargée en sel). Des moyens pour faire agir un phénomène périodique 51, 52 permettent de faire agir au moins un phénomène périodique sur le courant d'entrée d'eau de mer. Des moyens pour faire agir un phénomène périodique 53, 54 permettent de faire agir un phénomène périodique sur le milieu véhicule et le milieu à séparer. Les moyens permettant de faire agir un phénomène périodique 51, 52, 53 et 54 sont commandés par au moins une source 50 d'alimentation réglable par moyen de réglage électronique 50a.

A noter que le courant régulé d'entrée d'eau de mer peut également être de l'eau naturellement ou artificiellement salée, ou encore de l'eau dans la composition de laquelle peuvent entrer différents composants liquides, des gaz, des corps colloïdaux ou solides ou leurs combinaisons.

Le milieu véhicule peut être constitué par des molécules d'eau gazéifiées (vaporisées), des gouttelettes fines de l'eau et d'air pulsé (refoulé). L'air pulsé peut être constitué par des éléments assurant le refroidissement et/ou congélation les molécules d'eau gazéifiées (vaporisée) obtenus par le traitement vibratoire 54.

Le milieu à séparer peut être constitué par de l'eau salée concentrée et cristaux du sel aussi que les composition duquel peuvent entrer des différents composants liquides, des gaz, des cors colloïdaux ou solides ou leurs combinaisons.

Le dispositif de séparation 43, qui disperse et injecte l'eau salée sous forme de gaz (vapeur froide inférieure à 100°C) et des gouttelettes fines de l'eau salée avec la dimension de particules inférieures au micron, comporte :
- au moins un dispositif 43a de micronisation et de pulvérisation à fine dispersion de l'eau salée par exemple au moins un pulvérisateur pneumatique, hydraulique et/ou mixte, ou par exemple système acoustique (vibrateur ultrasonore piézoélectrique), mécanique (sirène, soufflet), magnétique (magnétostriction), électrique (réflecteur à moteur électrique) ou encore leurs combinaisons, ou encore la combinaison des systèmes pneumatique, hydraulique mécaniques, électriques, magnétiques et acoustiques cités ;
- au moins un dispositif de condensation 43b permettant la séparation définitive des molécules d'eau gazéifiées (vaporisées) et d'eau sous la forme de micro gouttelettes d'eau salées. Ce dispositif de condensation est, par exemple, un système statique tel qu'une chicane statique qui comporte une structure fixe avec une configuration ondulatoire qui forme des ondes stationnaires immobiles et qui permet de créer des vagues du flux du milieu véhicule. Il peut également être un système dynamique tel qu'une chicane dynamique qui comporte un dispositif engendrant un écoulement pulsé du milieu traité, par l'action d'une turbine à air ou d'un ventilateur, ou encore par un système mécano acoustique (par exemple sirène ou sifflet), ou leur combinaison. Le dispositif de la condensation 43b peut encore être constitué de la combinaison de chicanes statiques et dynamiques.

Un dispositif permettant de faire agir un phénomène périodique 53 représente un dispositif de refroidissement et/ou de congélation des molécules d'eau pure. Il constitue un système de congélation classique et/ou un agent réfrigérant, facilement séparable par la suite de milieu véhicule.

Une dispositif d'évacuation du fluide porteur 48 assure la translation des molécules d'eau gazéifiées (vaporisées). Il est constitué par exemple d'un ventilateur aspirateur régulé, et/ou au moins une pompe pneumatique aspirante, ou encore par leur ensemble. Il est complété par un dispositif 48a assurant l'évacuation du courant régulé du milieu véhicule, constitué par exemple d'une vanne régulée et/ou d'une pompe d'extraction centrifuge destiné au condensation des molécules d'eau gazéifiées.

Un dispositif d'évacuation de constituant complémentaire 49 assurant l'évacuation du courant régulé du milieu à séparer, est constitué par exemple d'une vanne régulée et/ou d'une pompe hydraulique de vidange.

Chacun des dispositifs permettant de faire agir des phénomènes périodiques 51, 52, 53 et 54, peut être constitué d'au moins un dispositif de type mécanique, par exemple une pompe hydraulique, pneumatique ou mixte, ou d'au moins un dispositif d'action ultrasonore, par exemple une sirène, un sifflet, un vibreur piézo-électrique, ou d'au moins un dispositif créant un champ électromagnétique ou magnétique, ou encore un rayonnement thermique de configuration et d'intensité correspondante, ou enfin de différentes combinaisons des dispositifs et systèmes cités plus haut.

Le dispositif d'alimentation 50 assure les régimes indispensables de fonctionnement des dispositifs permettant de faire agir des phénomènes périodiques 51, 52, 53 et 54, ainsi que des dispositifs de pulvérisation 43a et de séparation 43b. Il comprend, en outre, le régulateur 50a permettent varier les fréquences et les puissances (dépenses d'énergie) en fonction des régimes de fonctionnement des systèmes cités qu'il alimente et gère. De cette manière, le dispositif d'alimentation 50 et le dispositif de régulation 50a peuvent assurer la régulation de débit du dispositif par variation de la fréquence et de l'amplitude des actions vibratoires sur les milieux traités, ainsi que la régulation des régimes de travail des dispositifs d'évacuation de fluide porteur 48 et du constituant complémentaire 49 assurant la translation et l'évacuation de ces milieux. En qualité de source d'énergie, on peut aussi utiliser les courants du milieu traité et du milieu véhicule et du milieu à séparer, par exemple pour alimenter les sirènes et sifflets.

Conformément au schéma représenté à la figure 3, le procédé de dessalement de l'eau de mer, et plus généralement d'eau salée, en un milieu véhicule et un milieu à séparer conforme à l'invention, est mis en oeuvre de la façon qui va être décrite maintenant.

Le courant régulé d'eau de mer est admis dans le dispositif de micronisation et de pulvérisation 43a. Au cours de son déplacement, le courant de l'eau de mer peut être soumis à au moins une action vibratoire 51, immédiatement avant sa pénétration dans le dispositif de pulvérisation 43a, par exemple au moyen d'un rayonnement thermique (inférieure à 100°C), ce qui crée une condition complémentaire favorable au traitement de l'eau de mer dans le dispositif de pulvérisation 43a réalisant sa micronisation et pulvérisation dans la chambre 46.

Les actions de phénomènes périodiques 51 et 52, ensemble avec l'action du dispositif de micronisation et pulvérisation 43a établissent les conditions nécessaires et suffisantes pour la pulvérisation de l'eau de mer à dispersion fine, sous forme de l'eau gazéifié comme par exemple la vapeur froide (inférieure à 100°C) et les gouttelettes fine de l'eau salée (inférieure à 1 micron) préparées pour le traitement dans le dispositif de séparation 43b.

Ensuite, ces molécules d'eau gazéifiées et gouttelettes à dispersion fine du milieu véhicule pénètrent dans la chambre 44 par l'action du dispositif d'évacuation du constituant complémentaire 48 où ils peuvent :
- continuer leur séparation définitive par l'interaction avec le dispositif de séparation 43b produisant les ondes stationnaires (immobiles) ou/et dynamiques,
- refroidir et/ou congeler les molécules d'eau pures par l'action du dispositif de refroidissement 53, et ensuite fondre sous l'action d'un phénomène périodique 54 tel qu'un rayonnement thermique, par exemple à micro-ondes
- ou encore traiter ensemble par la combinaison des excitations réalisées par le dispositif de séparation 43b et les dispositifs destinés à faire agir des phénomènes périodiques 53 et 54.

Le milieu véhicule (l'eau pure) obtenue par les actions cité est évacuées à l'aide du dispositif d'évacuation du milieu véhicule, 48 et 48a, en régime régulé.

Les gouttelettes du milieu à séparer, par exemple d'eau à grande concentration de sel, dont la température de congélation se distingue considérablement de la température de congélation du milieu véhicule, sont concentrées au fond dans la chambre 44 et sont évacuées hors du système par le dispositif d'évacuation du constituant complémentaire 49, en régime régulé.

Il est prévu la condensation de l'eau gazéifiée (vapeur froide inférieure à 100°C) par dispositif 48a de condensation par exemple dans au moins une chambre de condensation d'une pompe centrifuge. Dans ce cas, l'utilisation de dispositifs permettant de faire agir des phénomènes périodiques 53 et 54, pour assurer la congélation et le réchauffement n'est pas nécessaire.

D'une façon générale, la présente invention fait appel à un procédé d'action simultanée sur un milieu physique et/ou sur un milieu à séparer à l'aide d'au moins deux actions périodiques, tel que décrit précédemment dans le brevet français FR-A-2 744 931 des mêmes demandeurs.

Cependant, à la différence de l'invention décrite dans la demande de brevet précitée, la mise en oeuvre d'au moins deux actions périodiques sur les milieux traités est utilisée non pas pour leur mélange, mais pour leur séparation et leur concentration.

Dans le cadre de la présente invention, le procédé selon le brevet français FR-A-2 744 931 est appliqué à la séparation et à la concentration de milieux physiques de la façon suivante.

Conformément à ce procédé, dans des conditions déterminées, dans un milieu traité simultanément par au moins deux actions périodiques, on réalise une cavitation résonnante, qui brise les molécules du milieu physique en constituants, par exemple en molécules du milieu véhicule et du milieu à séparer.

Les molécules du milieu véhicule et du milieu à séparer sont alors présentes sous forme non liée grâce à leur excitation résonnante.

Ensuite, si l'on applique à un tel milieu, dans lequel les molécules de corps différents se trouvent dans un étant non lié (de résonance), une action périodique constituée par exemple par une force centrifuge engendrée par un système de séparation rotatif constitué par une centrifugeuse, alors selon des lois physiques connues, les corps de densités différentes se concentrent sous l'action de la force centrifuge dans des zones déterminées du dispositif de séparation.

Ainsi, le processus de séparation et de concentration des différents milieux par action sur eux d'une série d'actions périodiques permet de réaliser leur retrait séparé à l'aide des dispositifs d'évacuation.

## Revendications

1. Procédé vibratoire de séparation d'un mélange fluide en un fluide porteur et un constituant complémentaire à l'aide d'une installation de séparation constituée d'un dispositif d'arrivée de mélange fluide (2, 22, 42), d'une enceinte de séparation (1, 21, 41) comportant une première chambre (6, 26, 46), une deuxième chambre (4, 24, 44) et un moyen de séparation (3, 23, 43), d'un dispositif d'évacuation de fluide porteur (8, 28, 48) et d'un dispositif d'évacuation du constituant complémentaire (9, 29, 49), selon lequel on envoie un courant de mélange fluide dans le dispositif d'arrivée de mélange fluide (2, 22, 42) de façon à l'introduire dans la première chambre (6, 26, 46) , à l'aide du moyen de séparation on sépare le mélange fluide en un fluide porteur qui est recueilli dans la deuxième chambre (4, 24, 44) et un constituant complémentaire qui reste dans la première chambre (6, 26, 46), et on évacue le fluide porteur par le dispositif d'évacuation du fluide porteur (8, 28, 48) et le composant complémentaire par le dispositif d'évacuation du composant complémentaire (9, 29, 49) , **caractérisée en ce que**, dans le dispositif d'arrivée de mélange fluide (2, 22, 42), on soumet le courant de mélange fluide à l'action d'au moins un premier phénomène périodique ayant une première fréquence, et, dans la première chambre (6, 26, 46), on soumet le mélange fluide à l'action d'au moins un deuxième phénomène périodique ayant une deuxième fréquence, les fréquences du premier phénomène périodique et du deuxième phénomène périodique étant de préférence dans un rapport supérieur à 10, et on régule le débit d'arrivée du mélange fluide, le débit d'évacuation du fluide porteur et le débit d'évacuation du constituant complémentaire, au moins un des phénomènes périodiques utilisés étant de type mécanique, acoustique, ultrasonique, thermique, électrique, magnétique ou électromagnétique ou mixte .

2. Procédé selon la revendication 1 **caractérisé en ce que**, en outre, on soumet au moins le moyen de séparation (3, 23, 43) à l'action d'au moins un troisième phénomène périodique.

3. Procédé selon la revendications 1 ou la revendication 2 **caractérisé en ce que** le moyen de séparation (3) comporte au moins une membrane.

4. Procédé selon l'une quelconque des revendication 1 à 3 **caractérisé en ce que**, lors de l'introduction du mélange fluide dans la première chambre (26, 46), on pulvérise finement ou on micronise ledit mélange fluide de façon à produire milieu constitué de particules dont les dimensions sont inférieures au micron, et à l'aide de phénomènes périodiques, on condense lesdites particules, et on sépare le fluide porteur et le constituant complémentaire.

5. Procédé selon la revendication 4 **caractérisé en ce que** pour faciliter la pulvérisation ou la micronisation du mélange fluide, on soumet le mélange fluide à l'action d'un phénomène périodique du type micro-ondes, ultrasonore ou mixte.

6. Procédé selon la revendication 4 ou la revendication 5 **caractérisé en ce que** pour séparer le mélange fluide micronisé en fluide porteur et en constituant complémentaire on crée des vagues de flux de fluide porteur à l'aide d'au moins une action périodique formée par un dispositif de condensation (23b, 43b) constitué d'une chicane statique et/ou dynamique.

7. Procédé selon l'une quelconque des revendications 4 à 6 **caractérisé en ce que** le mélange fluide est de l'eau de mer, **en ce que** le fluide porteur est de l'eau douce et **en ce que** l'élément complémentaire est de l'eau à forte concentration en sel.

8. Installation pour la mise en oeuvre du procédé selon l'une quelconque des revendications 1 à 4 comprenant un dispositif d'arrivée de mélange fluide (2, 22, 42), une enceinte de séparation (1, 21, 41), un dispositif d'évacuation de fluide porteur (8, 28, 48) et d'un dispositif d'évacuation du constituant complémentaire (9, 29, 49), ladite enceinte de séparation (1, 21, 41) comportant une première chambre (6, 26, 46), une deuxième chambre (4, 24, 44) et un moyen de séparation (3, 23, 43), **caractérisé en ce que** le dispositif d'arrivée de mélange fluide (2, 22, 42) comprend au moins un dispositif pour faire agir au moins un premier phénomène périodique (11, 31, 51), **en ce que** au moins la première chambre (6, 26, 46) comporte au moins un dispositif pour faire agir au moins un deuxième phénomène périodique (12, 32, 52), et **en ce qu'**il comprend en outre des moyens de commande (10, 30, 50) et de régulation (10a, 30a, 50a) du dispositif d'arrivée de mélange fluide (2, 22, 42), du dispositif d'évacuation du fluide porteur (8, 28, 48), du dispositif d'évacuation du composé complémentaire (9, 29, 49) , et des dispositifs destinés à faire agir les au moins un premiers et deuxièmes phénomènes périodiques (11, 12, 31, 32, 51, 52).

9. Installation selon la revendication 8, **caractérisé en ce que** au moins un dispositif pour faire agir un phénomène périodique (11, 12, 31, 32, 51, 52) est un sifflet ou une sirène animés par le courant d'entée du mélange fluide.

10. Installation pour la mise en oeuvre du procédé selon l'une quelconque des revendications 4 à 6 comprenant un dispositif d'arrivée de mélange fluide (22, 42), une enceinte de séparation (21, 41), un dispositif d'évacuation de fluide porteur (28, 48) et d'un dispositif d'évacuation du constituant complémentaire (29, 49), ladite enceinte de séparation (21, 41) comportant une première chambre (26, 46), une deuxième chambre (24, 44) et un moyen de séparation (23, 43), **caractérisé en ce qu'**il comprend au moins un moyen pour faire agir un phénomène périodique (31, 51) électromagnétique et/ou thermique sur le courant d'arrivée de mélange fluide, au moins un moyen pour faire agir un phénomène périodique (32, 52) mécanique ou ultrasonore et un moyen de pulvérisation (23a, 43a) afin de microniser et de pulvériser sous forme de vapeur ou d'aérosol le mélange fluide, **en ce qu'**il comprend un moyen de condensation (23b, 43b) du mélange fluide en un fluide porteur et un composé complémentaire, du type comprenant au moins un moyen pris parmi une chicane statique, une chicane dynamique générée par un sifflet ou une sirène, ou un moyen agissant par refroidissement ou congélation, **en ce qu'**ïl comprend un moyen pour faire agir un phénomène périodique (34, 54), du type électromagnétique et/ou thermique pour réchauffer le fluide porteur, **en ce qu'**il comprend des moyens (28, 48) pour évacuer le fluide porteur et des moyens pour évacuer le composant complémentaire (29, 49), constitués de pompes aspirantes et de vannes régulatrices et **en ce qu'**il comprend des moyens d'alimentation (30, 50) et de régulation (30a, 50a) des moyens pour faire agir les phénomènes périodiques.

## Claims

1. Vibratory method of separation of a fluid mixture into a carrier fluid and a complementary component using a separation installation comprised of a fluid mixture inlet (2, 22, 42); a separation chamber (1, 21, 41) including a first chamber (6, 26, 46), a second chamber (4, 24, 44), and a separation means (3, 23, 43); a carrier fluid outlet (8, 28, 48) and a complementary component outlet (9, 29, 49), according to which a fluid mixture flow in introduced into the fluid mixture inlet (2, 22, 42) so as to introduce it into the first chamber (6, 26, 46); the fluid mixture is separated, using the separation means, into a carrier fluid which is collected in the second chamber (4, 24, 44) and a complementary component which remains in the first chamber (6, 26, 46); and the carrier fluid is evacuated using the carrier fluid outlet (8, 28, 48) and the complementary component is evacuated using the complementary component outlet (9, 29, 49), **characterized in that** in the fluid mixture inlet (2, 22, 42), the fluid mixture flow is subjected to at least a first periodic action with a first frequency and, in the first chamber (6, 26, 46), the fluid mixture is subjected to at least a second periodic action with a second frequency, the frequencies of the first and second periodic actions being preferably in a ratio greater than 10, and the rates of the fluid mixture inflow, carrier fluid outflow, and complementary component outflow are regulated, and at least one of the periodic actions used is of mechanical, acoustic, ultrasonic, thermal, electrical, magnetic, electromagnetic, or mixed type.

2. Method according to claim 1, **characterized in that**, besides, the separation means (3, 23, 43) is subjected to at least a third periodic action.

3. Method according to claim 1 or 2, **characterized in that** the separation means (3) includes at least a membrane.

4. Method according to claims 1 to 3, **characterized in that**, when introducing the fluid mixture in the first chamber (26, 46), said fluid mixture is micronized or finely pulverized so as to form a medium comprised of particles with size less than one micron and said particles are condensed, using periodic actions, and the carrier fluid and the complementary component are separated.

5. Method according to claim 4, **characterized in** the fact that, to facilitate the pulverization or micronization of the fluid mixture, said mixture is subjected to a periodic action of microwave, ultrasonic, or mixed type.

6. Method according to claims 4 or 5, **characterized in** the fact that, to separate the micronized fluid mixture into carrier fluid and complementary component, flux waves of the carrier fluid are created using at least a periodic action induced by a condensation device (23b, 43b) comprised of a static and/or dynamic baffle.

7. Method according to claims 4 to 6, **characterized in that** the fluid mixture is sea water, the carrier fluid is fresh water, and the complementary component is water with high salt concentration.

8. Installation for implementing the method according to claims 1 to 4 including a fluid mixture inlet (2, 22, 42), a separation chamber (1, 21, 41), a carrier fluid outlet (8, 28, 48), and a complementary component outlet (9, 29, 49); said separation chamber (1, 21, 41) including a first chamber (6, 26, 46), a second chamber (4, 24, 44) and a separation means (3, 23, 43), **characterized in that** the fluid mixture inlet (2, 22, 42) includes at least a device to induce at least a first periodic action (11, 31, 51), **in that** at least the first chamber (6, 26, 46) includes at least a device to induce at least a second periodic action (12, 32, 52), and **in that**, besides, it includes control (10, 30, 50) and regulation devices (10a, 30a, 50a) for the fluid mixture inlet (2, 22, 42), carrier fluid outlet (8, 28, 48), complementary component outlet (9, 29, 49), and for the devices used to induce at least a first and second periodic actions (11, 12, 31, 32, 51, 52).

9. Installation according to claim 8, **characterized in that** at least one device to induce a periodic action (11, 12, 31, 32, 51, 52) is a whistle or a siren put in action by the fluid mixture inflow.

10. Installation for implementing the method according to claims 4 to 6 including a fluid mixture inlet (22, 42), a separation chamber (21, 41), a carrier fluid outlet (28, 48), and a complementary component outlet (29, 49); said separation chamber (21, 41) including a first chamber (26, 46), a second chamber (24, 44), and a separation means (23, 43), **characterized in that** it comprises at least a device to induce an electromagnetic and/or thermal periodic action (31, 51) on the fluid mixture inflow, at least a device to induce a mechanical or ultrasonic periodic action (32, 52), and a pulverization device (23a, 43a) to micronize and pulverize the fluid mixture in the form of vapor or aerosol; **in that** it comprises a device for condensation (23b, 43b) of the fluid mixture into a carrier fluid and a complementary component, of type including at least a device selected from a static baffle or a dynamic baffle comprised of a whistle or a siren, or a cooling or freezing device; **in that** it comprises a device to induce an electromagnetic and/or thermal periodic action (34, 54) to heat the carrier fluid; **in that** it comprises devices (28, 48) for evacuating the carrier fluid and devices for evacuating the complementary component (29, 49) including suction pumps and regulating valves, and **in that** it comprises feeding (30, 50) and regulation (30a, 50a) means for the devices inducing the periodic actions.

## Patentansprüche

1. Vibrationsverfahren zum Trennen eines Fluidgemischs in ein Trägerfluid und eine komplementäre Komponente mit Hilfe einer Trennungseinrichtung, die zusammengesetzt ist aus einer Fluidgemisch-Eingangsvorrichtung (2, 22, 42), einem Trennraum (1, 21, 41), der eine erste Kammer (6, 26, 46), eine zweite Kammer (4, 24, 44) und ein Trennungsmittel (3, 23, 43) aufweist, einer Trägerfluid-Ableitungsvorrichtung (8, 28, 48) und einer Vorrichtung zum Ableiten der komplementären Komponente (9, 29, 49), gemäß welchem ein Fluidgemisch-Strom auf eine derartige Weise in die Fluidgemisch-Eingangsvorrichtung (2, 22, 42) zugeführt wird, dass dieser in die erste Kammer (6, 26, 46) eingeführt wird, das Fluidgemisch mit Hilfe des Trennungsmittels in ein Trägerfluid, das in der zweiten Kammer (4, 24, 44) aufgenommen wird, und eine komplementäre Komponente, die in der ersten Kammer (6, 26, 46) bleibt, getrennt wird, und das Trägerfluid durch die Trägerfluid-Ableitungsvorrichtung (8, 28, 48) und die komplementäre Komponente durch die Vorrichtung zum Ableiten der komplementären Komponente (9, 29, 49) abgeleitet werden, **dadurch gekennzeichnet, dass** der Fluidgemisch-Strom in der Fluidgemisch-Eingangsvorrichtung (2, 22, 42) der Wirkung mindestens eines ersten periodischen Phänomens mit einer ersten Frequenz unterworfen wird, und das Fluidgemisch in der ersten Kammer (6, 26, 46) der Wirkung mindestens eines zweiten periodischen Phänomens mit einer zweiten Frequenz unterworfen wird, wobei die Frequenzen des ersten periodischen Phänomens und des zweiten periodischen Phänomens vorzugsweise ein Verhältnis von größer als 10 haben, und der Eingangsdurchfluss des Fluidgemischs, der Ableitungsdurchfluss des Trägerfluids und der Ableitungsdurchfluss der komplementären Komponente reguliert werden, wobei mindestens eines der verwendeten periodischen Phänomene mechanischer, akustischer, Ultraschall-, thermischer, elektrischer, magnetischer oder elektromagnetischer oder daraus gemischter Art ist.

2. Verfahren gemäß Anspruch 1, **dadurch gekennzeichnet, dass** ferner mindestens das Trennungsmittel (3, 23, 43) der Wirkung mindestens eines dritten periodischen Phänomens unterworfen wird.

3. Verfahren gemäß Anspruch 1 oder Anspruch 2, **dadurch gekennzeichnet, dass** das Trennungsmittel (3) mindestens eine Membran aufweist.

4. Verfahren gemäß einem der Ansprüche 1 bis 3, **dadurch gekennzeichnet, dass** beim Einführen des Fluidgemischs in die erste Kammer (26, 46) das Fluidgemisch fein pulverisiert oder mikronisiert wird, so dass ein Medium erzeugt wird, das aus Teilchen gebildet ist, deren Abmessungen kleiner als ein Mikrometer sind, und dass die Teilchen mit Hilfe von periodischen Phänomenen kondensiert werden, und das Trägerfluid und die komplementäre Komponente voneinander getrennt werden.

5. Verfahren gemäß Anspruch 4, **dadurch gekennzeichnet, dass** das Fluidgemisch, um das Pulverisieren oder Mikronisieren des Fluidgemischs zu erleichtern, der Wirkung eines periodischen Phänomens des Mikrowellen-, Ultraschall- oder Mischtyps unterworfen wird.

6. Verfahren gemäß Anspruch 4 oder Anspruch 5, **dadurch gekennzeichnet, dass**, um das mikronisierte Fluidgemisch in ein Trägerfluid und eine komplementäre Komponente zu trennen, mit Hilfe mindestens einer periodischen Wirkung, die durch eine Kondensierungsvorrichtung (23b, 43b) gebildet von einem statischen und/oder dynamischen Hindernis gebildet wird, Trägerfluidstromwellen erzeugt werden.

7. Verfahren gemäß einem der Ansprüche 4 bis 6, **dadurch gekennzeichnet, dass** das Fluidgemisch Meerwasser ist, das Trägerfluid Süßwasser ist, und die komplementäre Komponente Wasser mit hoher Salzkonzentration ist.

8. Einrichtung zum Durchführen des Verfahrens gemäß einem der Ansprüche 1 bis 4, aufweisend eine Fluidgemisch-Eingangsvorrichtung (2, 22, 42), einen Trennraum (1, 21, 41), eine Trägerfluid-Ableitungsvorrichtung (8, 28, 48) und eine Vorrichtung zum Ableiten der komplementären Komponente (9, 29, 49), wobei der Trennraum (1, 21, 41) eine erste Kammer (6, 26, 46), eine zweite Kammer (4, 24, 44) und ein Trennungsmittel (3, 23, 43) aufweist, **dadurch gekennzeichnet, dass** die Fluidgemisch-Eingangsvorrichtung (2, 22, 42) mindestens eine Vorrichtung aufweist, um mindestens ein erstes periodisches Phänomen (11, 31, 51) wirken zu lassen, dass mindestens die erste Kammer (6, 26, 46) mindestens eine Vorrichtung aufweist, um mindestens ein zweites periodisches Phänomen (12, 32, 52) wirken zu lassen, und dass sie ferner Mittel zum Steuern (10, 30, 50) und zum Regulieren (10a, 30a, 50a) der Fluidgemisch-Eingangsvorrichtung (2, 22, 42), der Trägerfluid-Ableitungsvorrichtung (8, 28, 48), der Vorrichtung zum Ableiten der komplementären Komponente (9, 29, 49) und der Vorrichtungen aufweist, die vorgesehen sind, um das mindestens eine erste und zweite periodische Phänomen (11, 12, 31, 32, 51, 52) wirken zu lassen.

9. Einrichtung gemäß Anspruch 8, **dadurch gekennzeichnet, dass** mindestens eine Vorrichtung zum Wirkenlassen eines periodischen Phänomens (11, 12, 31, 32, 51, 52) eine Pfeife oder eine Sirene ist, die durch den Fluidgemisch-Eingangsstrom angeregt werden.

10. Einrichtung zum Durchführen des Verfahrens gemäß einem der Ansprüche 4 bis 6, aufweisend eine Fluidgemisch-Eingangsvorrichtung (22, 42), einen Trennraum (21, 41), eine Trägerfluid-Ableitungsvorrichtung (28, 48) und eine Vorrichtung zum Ableiten der komplementären Komponente (29, 49), wobei der Trennraum (21, 41) eine erste Kammer (26, 46), eine zweite Kammer (24, 44) und ein Trennungsmittel (23, 43) aufweist, **dadurch gekennzeichnet, dass** sie aufweist: mindestens ein Mittel, um ein elektromagnetisches und/oder thermisches periodisches Phänomen (31, 51) auf den Fluidgemisch-Eingangsstrom wirken zu lassen, mindestens ein Mittel, um ein mechanisches oder Ultraschall- periodisches Phänomen (32, 52) wirken zu lassen, und ein Pulverisierungsmittel (23a, 43a), um das Fluidgemisch in Form von Dampf oder Aerosol zu mikronisieren und zu pulverisieren, dass sie ein Mittel zum Kondensieren (23b, 43b) des Fluidgemischs in ein Trägerfluid und eine komplementäre Komponente aufweist, des Typs, der mindestens ein Mittel aufweist, das ausgewählt ist aus einem statischen Hindernis, einem mittels einer Pfeife oder einer Sirene erzeugten dynamischen Hindernis, oder einem durch Abkühlen oder Einfrieren wirkenden Mittel, dass sie ein Mittel aufweist, um ein periodisches Phänomen (34, 54) des elektromagnetischen und/oder thermischen Typs wirken zu lassen, um das Trägerfluid wieder aufzuwärmen, dass sie Mittel (28, 48), um das Trägerfluid abzuleiten, und Mittel, um die komplementäre Komponente (29, 49) abzuleiten, aufweist, die aus Saugpumpen und Regelventilen gebildet sind, und dass sie Mittel zum Versorgen (30, 50) und Regulieren (30a, 50a) der Mittel zum Wirkenlassen der periodischen Phänomene aufweist.
